# FASCICULE DE BREVET EUROPEEN

(11) **EP 2 979 808 B1**
(45) Date de publication et mention de la délivrance du brevet: **28.08.2019**
(21) Numéro de dépôt: 14179303.4
(22) Date de dépôt: 31.07.2014
(51) Int. Cl.: B23P 15/00, F01D 9/04, F04D 29/02, F04D 29/54, B29C 65/06, B23K 20/12

(54) **Procédé de réalisation d'un stator de compresseur de turbomachine axiale**
Verfahren zur Herstellung eines Kompressorstators für ein axiales Strömungsmaschine
Method for manufacturing a stator of an axial turbomachine compressor

(43) Date de publication de la demande: 03.02.2016
(73) Titulaire: Safran Aero Boosters SA, 4041 Herstal (BE)
(72) Inventeur: Hindryckx, François, 4130 Esneux (BE)
(74) Mandataire: Lecomte & Partners

(56) Documents cités:
- EP-A1- 1 143 108
- EP-A1- 2 339 120
- EP-A1- 2 535 513
- EP-A1- 2 937 516
- FR-A1- 2 931 715
- US-A- 5 248 077
- US-A1- 2008 141 531
- US-B1- 6 321 448

## Description

### Domaine technique

L'invention a trait à un procédé de fabrication d'un stator de turbomachine axiale, selon le préambule de la revendication 1. Plus précisément, l'invention a trait à un procédé de soudage d'une rangée d'aubes sur une virole externe de turbomachine axiale.

### Technique antérieure

Une turbomachine axiale comprend de manière connue une paroi externe permettant de guider un flux annulaire. Cette paroi peut en outre supporter plusieurs rangées d'aubes statoriques permettant de dévier l'écoulement. La paroi externe peut être réalisée sous la forme de plusieurs viroles formant des tronçons axiaux de la paroi externe. Ces tronçons sont assemblés axialement et fixés les uns aux autres pour former la paroi continue.

Dans le contexte d'un compresseur basse pression, ces viroles peuvent jouer un rôle structurant puisqu'elles permettent de relier le bec de séparation au carter intermédiaire de la turbomachine. Elles supportent chacune une rangée d'aubes.

Les aubes statoriques sont généralement soudées sur chaque virole de sorte à former une rangée annulaire. Ce mode de fixation permet de constituer un ensemble monobloc robuste et rigide. Cette architecture permet en outre de diminuer le nombre d'interfaces entre les éléments mécaniques.

Le document US 6,321,448 B1 divulgue un procédé de réalisation d'une virole externe de turbomachine selon le préambule de la revendication 1. Le procédé comprend la succession de plusieurs étapes, dont la découpe d'une tôle de sorte à lui donner des dimensions correspondant aux côtes extérieures de la virole externe du carter, cintrage de la tôle découpée pour former un tube, découpe laser de la tôle pour créer des ouvertures selon les profils des aubes, puis insertion et soudage des aubes dans leurs ouvertures en vue de leur fixation définitive. Ce procédé permet de réduire le temps pour positionner et ajuster les aubes dans le tube formant le carter. Cependant, ce procédé demande d'effectuer des découpes précises dont la présence fragilise le carter. L'opération de soudage des aubes est coûteuse puisqu'elle doit être réalisée sous vide. Ce type de soudage allonge le temps de préparation et de traitement des projections. Les soudures au niveau des ouvertures dégradent la résistance en fatigue du stator.

Un autre procédé est connu du document EP 2 937 516 A1, qui est un document selon l'article 54(3) CBE.

### Résumé de l'invention

### Problème technique

L'invention a pour objectif de résoudre au moins un des problèmes posés par l'art antérieur. Plus précisément, l'invention a pour objectif de simplifier le soudage d'un stator comprenant des aubes soudées sur une virole externe. L'invention a également pour objectif de réduire les coûts de réalisation d'un stator de turbomachine. L'invention a également pour objectif de réduire les pertes aérodynamiques au niveau du stator, notamment au niveau de la surface interne de la virole externe.

### Solution technique

L'invention a pour objet un procédé de réalisation d'un stator de turbomachine axiale selon la revendication 1.

Selon un mode avantageux de l'invention, lors de l'étape (c) soudage, les aubes sont soudées par friction orbitale.

Selon un mode avantageux de l'invention, après l'étape (b) cintrage, le procédé comprend au moins une étape de tournage de la virole externe.

Selon un mode avantageux de l'invention, l'étape de tournage comprend la réalisation d'une gorge annulaire externe s'étendant axialement au droit des soudures des aubes sur la virole, et éventuellement d'une portée tubulaire interne destinée à recevoir un joint annulaire et formée à distance axialement des soudures.

Selon un mode avantageux de l'invention, l'étape de tournage comprend la formation d'un bourrelet annulaire qui s'étend radialement vers l'extérieur et qui est disposé axialement au droit des soudures des aubes sur la virole.

Selon un mode avantageux de l'invention, le procédé comprend une étape de fraisage de la virole de sorte à former des moignons d'aubes sur la virole externe, l'étape de fraisage étant réalisée après l'étape (b) cintrage, et les portions de réception d'aubes étant formées sur les moignons.

Selon un mode avantageux de l'invention, après l'étape (b) cintrage, le procédé comprend au moins une étape de tournage de la virole externe et l'étape de fraisage est réalisée après l'étape de tournage.

Selon un mode avantageux de l'invention, le procédé comprend une étape de fraisage de la barre de sorte à former des moignons d'aubes sur la barre, l'étape de fraisage étant réalisée avant l'étape de cintrage, et les portions de réception d'aubes étant formées sur les moignons.

Selon un mode avantageux de l'invention, la virole externe comprend une paroi généralement annulaire avec un profil de révolution s'étendant principalement axialement, éventuellement la hauteur H radiale des moignons est supérieure à l'épaisseur E2 de la paroi annulaire, préférentiellement au moins deux fois supérieure, plus préférentiellement au moins trois fois supérieure.

Selon un mode avantageux de l'invention, lors de l'étape (c) soudage, au moins une ou chaque aube est soudée en étant frottée contre une portion de réception selon un mouvement comprenant une composante le long de la corde de ladite aube.

Selon un mode avantageux de l'invention, les portions de réception d'aubes forment une rangée annulaire de surfaces planes ; ou une surface annulaire généralement tubulaire ou tronconique.

Selon un mode avantageux de l'invention, la virole externe comprend une paroi généralement annulaire avec un profil de révolution s'étendant principalement axialement et au moins une, préférentiellement au moins deux brides annulaires de fixation s'étendant radialement vers l'extérieur, chaque bride annulaire étant disposée à une extrémité axiale de la paroi annulaire.

Selon un mode avantageux de l'invention, l'écart entre deux aubes voisines est inférieur à la hauteur radiale desdites aubes voisines, la rangée d'aubes statoriques comprend au moins quarante aubes, préférentiellement au moins cents aubes.

Selon un mode avantageux de l'invention, la virole externe et les aubes sont en un matériau métallique, notamment en titane, ou la virole externe et les aubes sont réalisées en des matériaux polymères thermoplastiques.

La virole comprend des moignons d'aubes sur lesquels sont soudées les aubes.

Au moins une ou chaque portion de réception d'aube comprend un contour en forme de profil aérodynamique d'aube cambré, avec éventuellement une pointe d'attaque reliée à une pointe de fuite par un bord intrados et un bord extrados.

La virole externe comprend des moyens de fixation disposés en amont et en aval de chaque rangée d'aubes, éventuellement les moyens de fixations sont formés sur des brides annulaires de fixation.

L'épaisseur maximale d'au moins un moignon est supérieure à l'épaisseur maximale de l'aube associée, préférentiellement trois fois supérieure.

Le profil de révolution de la paroi annulaire est incliné par rapport à l'axe de rotation de la turbomachine axiale.

Le procédé comprend en outre une étape d'usinage périphérique des soudures entre les aubes et la virole extérieure, éventuellement entre les aubes et les moignons.

Lors de l'étape fourniture ou réalisation, la barre est droite.

Au moins une ou chaque aube est soudée par friction en exerçant un effort généralement radial vers l'extérieur.

Le passage entre deux aubes voisines de la rangée présente une largeur inférieure à la corde desdites aubes.

À l'issue de l'étape cintrage la virole externe est une virole externe brute.

Selon un mode avantageux de l'invention, Le stator est compris dans une turbomachine, préférentiellement la turbomachine comprend plusieurs stators avec chacun une virole externe associée à une rangée d'aubes, et les stators étant fixés axialement les uns aux autres.

### Avantages apportés

L'invention simplifie le soudage des aubes puisqu'elle s'affranchit des préparatifs nécessaires au soudage par laser. Le temps pour réaliser chaque soudure est réduit. La mise en place des protections entre les aubes est purement supprimée, ce qui diminue les besoins en main d'oeuvre. Le soudage peut s'effectuer à l'air ambiant, sans métal d'apport, ce qui réduit encore les coûts.

Le soudage par friction est avantageux sur une virole préalablement cintrée car les effets thermiques sont réduits. La libération des éventuelles contraintes internes s'amoindrit, tout comme les éventuelles déformations qui peuvent survenir.

L'invention permet d'éloigner la soudure de la paroi de la virole. Ainsi, la zone affectée thermiquement n'en dégrade plus la résistance mécanique. L'invention supprime les éventuelles distances de sécurité axiale entre une soudure et une bride ou une forme de marche. La conception de la virole devient plus libre car des renforts peuvent être ajoutés sur la virole, au droit des soudures. Les soudures ne sont plus sur la paroi de la virole, ce qui évite de dégrader l'écoulement le long de sa surface interne. Les aubes peuvent être directement soudées via leurs pales aérodynamique, la réalisation de portions spécifiques, telles des plateformes de soudage, est économisée.

### Brève description des dessins

La figure 1 représente une turbomachine axiale selon l'invention.
La figure 2 est un schéma d'un compresseur de turbomachine selon l'invention.
La figure 3 est un diagramme du procédé de réalisation d'un stator de turbomachine axiale selon un premier mode de réalisation de l'invention.
La figure 4 présente l'étape de fourniture d'une barre selon l'invention.
La figure 5 illustre une étape de fraisage de moignons dans la barre selon un premier mode de réalisation de l'invention.
La figure 6 ébauche l'étape de cintrage de la barre selon un premier mode de réalisation de l'invention.
La figure 7 schématise l'étape de tournage de la virole externe brute selon un premier mode de réalisation de l'invention, à l'aide d'une coupe de la virole suivant l'axe 7-7 tracé sur la figure 6.
La figure 8 représente l'étape de soudage d'aubes sur la virole externe selon l'invention.
La figure 9 est un diagramme du procédé de réalisation d'un stator de turbomachine axiale selon un deuxième mode de réalisation de l'invention.
La figure 10 ébauche l'étape de cintrage de la barre selon un deuxième mode de réalisation de l'invention.
La figure 11 schématise l'étape de tournage de la virole externe brute selon un deuxième mode de réalisation de l'invention, à l'aide d'une coupe de la virole suivant l'axe 11-11 tracé sur la figure 10.
La figure 12 illustre une étape de fraisage de moignons dans la virole externe brute selon un deuxième mode de réalisation de l'invention.

### Description des modes de réalisation

Dans la description qui va suivre, les termes intérieur ou interne et extérieur ou externe renvoient à un positionnement par rapport à l'axe de rotation d'une turbomachine axiale. La direction radiale est perpendiculaire par rapport à l'axe de rotation.

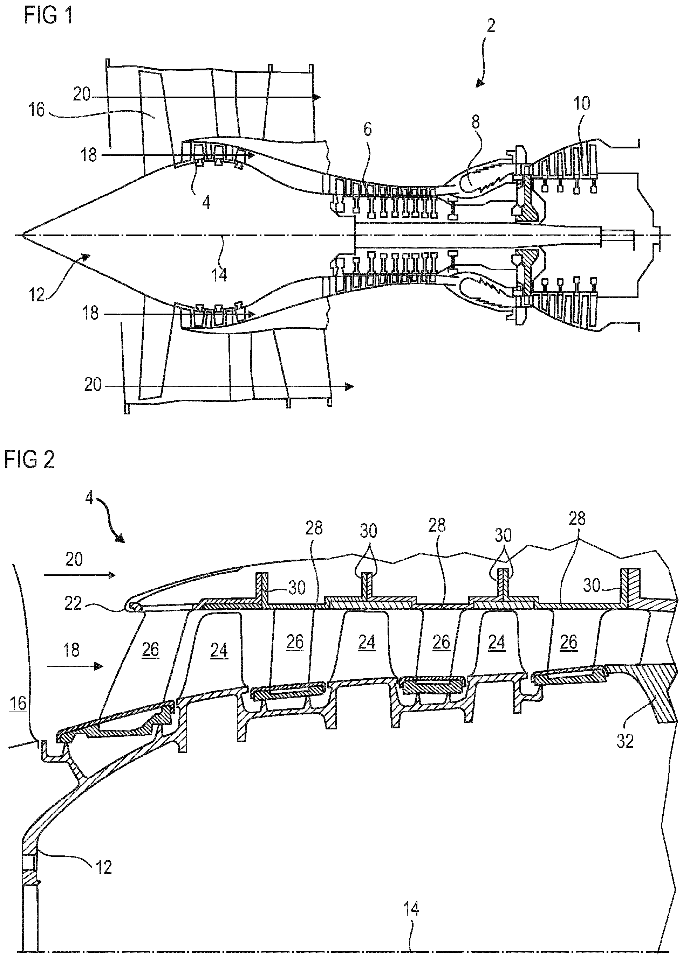

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale 2 telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur 4 comprend un stator avec des viroles externes 28 chacune associée à une rangée d'aubes statoriques 26 de sorte à former plusieurs redresseurs, en l'occurrence quatre, Les redresseurs sont associés au fan 16 ou à une rangée d'aubes rotoriques pour redresser le flux d'air, de sorte à convertir la vitesse du flux en pression.

Le stator peut comprendre plusieurs viroles externes 28 qui sont fixées les unes aux autres. Elles peuvent comprendre des brides annulaires de fixation 30 qui coopèrent avec les brides 30 des viroles voisines, ou avec le carter intermédiaire 32, ou avec le bec de séparation 22. Les viroles externes 28 peuvent chacune comprendre des portées cylindriques, mâle et/ou femelle pour former des emmanchements arbre alésage garantissant un alignement des viroles.

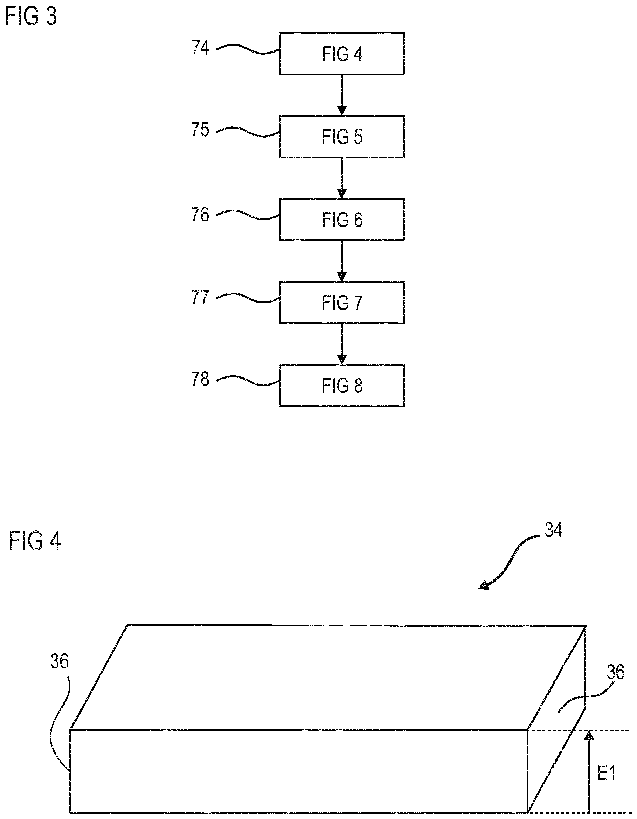

La figure 3 représente un procédé de réalisation d'un stator selon un premier mode de réalisation de l'invention.

Le procédé peut comprendre les étapes suivantes, éventuellement réalisées dans cet ordre :
- fourniture ou réalisation 74 d'une barre de matériau;
- usinage 75 d'une face de la barre, notamment par fraisage, de sorte à y former des zones ou portions de réception d'aubes, tels des moignons d'aubes ;
- cintrage 76 de la barre de sorte à décrire une boucle fermée pour former une virole externe brute ;
- tournage 77 de la virole externe brute ;
- soudage 78 par friction d'aubes à l'intérieur de la virole externe, éventuellement sur les moignons d'aubes.

Le procédé peut comprendre la répétition des étapes précédentes de sorte à former plusieurs viroles externes. Le procédé comprenant ensuite le rapprochement axial et la fixation les unes aux autres des différentes viroles précédement produites.

La figure 4 représente l'étape de fourniture ou réalisation d'une barre de matériau 34.

La barre 34 forme le matériau de départ pour la réalisation de la virole. Elle peut être généralement droite, tel un profilé de section quadrangulaire, éventuellement plein. Par barre, on entend un élément allongé avec des bords parallèles et des extrémités 36. L'épaisseur E1 de la barre est supérieure à 1cm, préférentiellement supérieure à 2cm, plus préférentiellement supérieure à 4cm ; la barre 34 étant plus large qu'épaisse.

La barre 34 peut être issue de laminage à chaud. Elle peut être en titane, en aluminium, en acier. Elle peut également être réalisée en polymère, en particulier en un matériau thermoplastique. Les aubes sont avantageusement du même matériau.

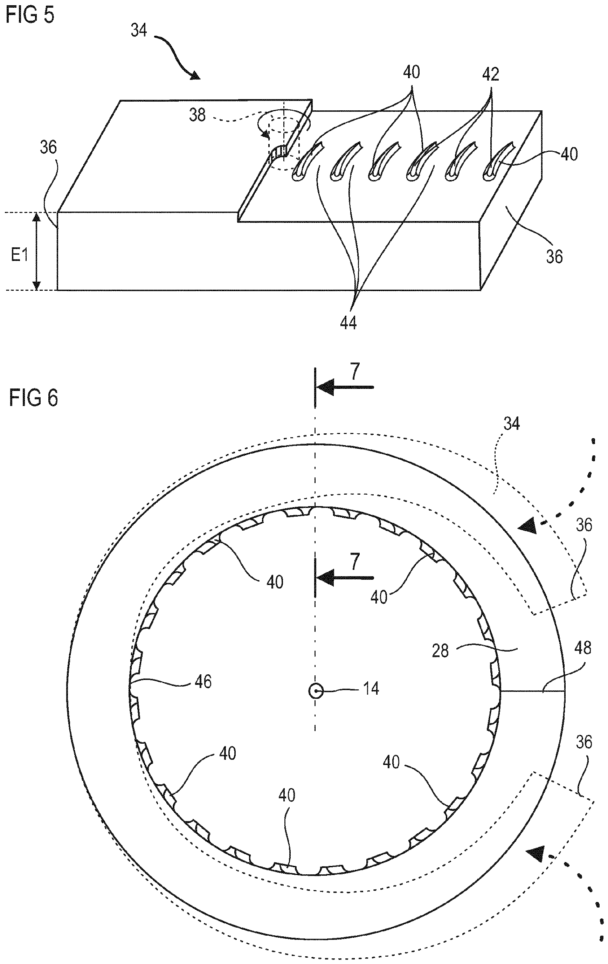

La figure 5 représente l'étape d'usinage, notamment par fraisage, de la barre.

L'usinage peut être réalisé à l'aide d'un outil coupant, telle une fraise 38. Il peut être réalisé et/ou complété par un procédé d'enlèvement de matière tel de l'électroérosion. L'usinage peut permettre de former et/ou délimiter les moignons 40 d'aubes. La barre 34 est usinée dans l'épaisseur en y taillant des zones 44 de moindres épaisseurs, entre lesquelles sont laissées les optionnels moignons 40 qui forment des nervures.

Les moignons 40 qui sont réalisés forment des portions de réception 42 d'aubes. de Leurs sommets ou extrémités peuvent correspondre avec l'enveloppe la barre brute et/ou peuvent présenter des formes de profils aérodynamiques qui coïncident chacun avec le profil de l'aube qui y sera soudée. Chaque portion de réception 42 est plate et peut être délimitée par au moins deux arcs, éventuellement cambrés dans le même sens. La hauteur d'au moins un moignon 40, préférentiellement de chaque moignon, est supérieure à la largeur de sa portion de réception 42, et donc de l'aube associée.

La figure 6 représente l'étape de cintrage de la barre 34 selon le premier mode de réalisation de l'invention de sorte à former une virole externe 28. La virole externe 28 ainsi produite peut être brute, en ce sens que certains usinages peuvent subsister avant d'atteindre sa forme définitive.

La surface interne 46 de la virole comporte les portions de réception 42 d'aubes. Lors du cintrage, ces dernières sont tournées vers l'intérieur de la virole externe, en face de l'axe 14 de symétrie de la virole qui coïncide avec l'axe de rotation 14 de la turbomachine. Les portions de réception 42 forment une rangée annulaire de surfaces régulièrement réparties.

La barre 34 est cintrée, ses extrémités 36 opposées sont rapprochés l'une de l'autre en la courbant. Le cintrage peut permettre de réaliser une boucle d'un tour. Le cintrage peut être réalisé à froid, c'est-à-dire à température ambiante. Le matériau peut se déformer plastiquement, notamment dans le cas d'une barre métallique. Il est éventuellement possible d'effectuer un cintrage à chaud, éventuellement dans le cas d'une barre en polymère thermoplastique, où le matériau est porté au-delà de sa transition vitreuse.

La barre 34 peut être cintrée de différentes manières. Elle est arquée, éventuellement par passes successives entres des rouleaux, en modifiant progressivement sa courbure. Elle peut aussi être cintrée par enroulement, par poussée, par roulage.

L'étape de cintrage peut comprendre la réalisation d'une soudure 48 entre les extrémités 36 de la barre 34 afin de verrouiller la boucle. La barre devient une bague continue, avec une symétrie de révolution.

Effectuer le cintrage après le fraisage offre l'avantage d'effectuer cette déformation sur une épaisseur moindre, ce qui réduit les efforts mécaniques de déformation nécessaires, tout comme les déformations par rapport à la fibre neutre.

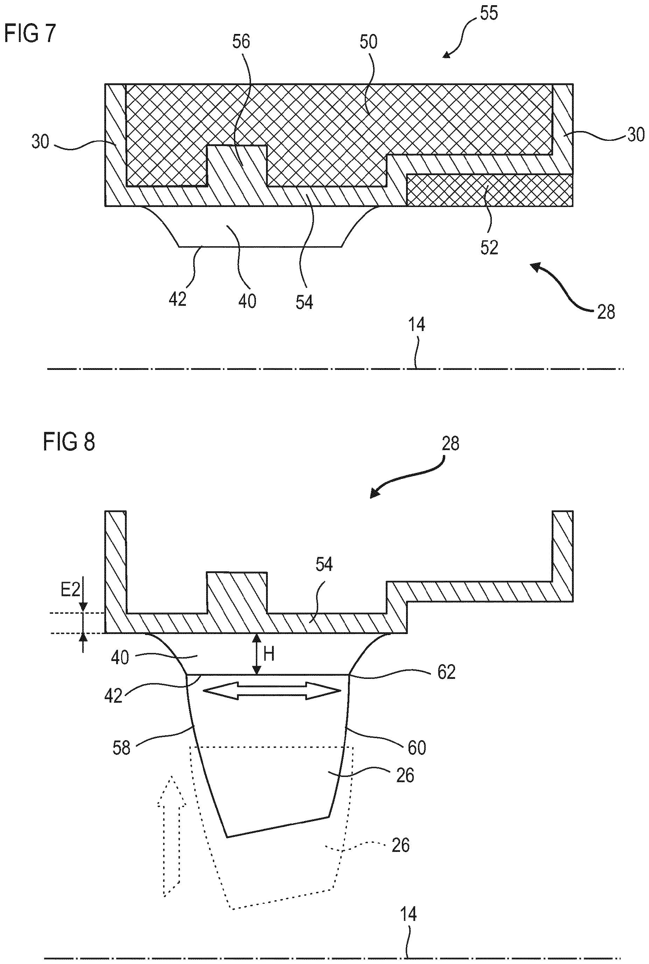

La figure 7 représente l'étape d'usinage par tournage de la virole externe 28 brute selon le premier mode de réalisation de l'invention.

L'étape de tournage de la virole externe 28 brute peut comprendre au moins un, éventuellement au moins deux zones de tournage ; à savoir un tournage externe 50 et un tournage interne 52 ; qui pemettent de fomer une paroi annulaire 54 qui s'étend principalement axialement. Cette paroi 54 présente un profil de révolution par rapport à l'axe 14. A l'extérieur, le tournage peut permettre de tailler une gorge annulaire 55 délimitée par au moins une bride annulaire de fixation 30, préférentiellement par deux brides annulaires 30. Chaque bride 30 s'étend radialement et est disposée à une extrémité axiale de la virole pour permettre une fixation avec un élément disposé axialement. Ultérieurement, les brides peuvent être percées pour réaliser des moyens de fixation, tels des orifices. A l'intérieur, le tournage peut permettre de former une gorge pour recevoir un joint.

L'étape de tournage étape peut permettre de réaliser un bourrelet annulaire 56 de renfort. Il forme une ceinture de rigidification formant un épaississement radial de la virole externe 28, ou plus précisément de sa paroi annulaire 54. Le bourrelet 56 peut être disposé axialement au niveau des portions de réception 42 où les aubes sont soudées puisque les soudures sont séparées du bourelet par la paroi annulaire 54 et éventuellement par les moignons 40. La présence du bourelet 56 augmente l'inertie thermique lors de la soudure, et limite la dilataion. Il peut contribuer à rigidifier la virole externe 28 lors de la soudure par friction.

La figure 8 représente l'étape de soudage d'aubes 26 sur la virole externe 28 selon le premier mode de réalisation de l'invention. Au démarrage de cette étape, la virole externe 28 peut déjà présenter sa forme définitive, en ce sens qu'elle, ou son profil de révolution, ne subit plus d'enlèvement de matière.

Les aubes 26 soudées peuvent comprendre chacune un bord d'attaque 58 et un bord de fuite 60 saillants. Elles peuvent comprendre chacune une surface intrados et une surface extrados toutes deux cambrées. Les aubes 26 forment des ailettes ou des feuilles de matière qui peuvent être cambrées et incurvées. Leur étendue accélère le refroidissement de leurs soudures 62.

Les moignons 40 forment des blocs de matière, qui peuvent être plus large que les aubes 26 qui y sont soudées. Les hauteurs radiales H des moignons 40 peuvent être supérieures à l'épaisseur générale E2 de paroi annulaire 54 de la virole 28, la hauteur des moignons 40 étant mesurée selon l'épaisseur générale E2 de la paroi. Les moignons 40 peuvent être des pieds d'aubes, et peuvent présenter des rayons de raccordement à la virole, pour permettre une répartition d'efforts. L'aspect massif des moignons 40 permet de renforcer la virole 28, et également d'apporter une inertie thermique lors du soudage.

Les aubes 26 peuvent être soudées une à une par friction. Ce procédé est bénéfique car il ne nécessite que quelques secondes, éventuellement de deux à cinq secondes de friction pour souder une aube 28. L'existence des moignons optionnels 40 limite la déformation de la paroi 54 pendant et après la friction, en y formant des coussins.

Lors du soudage, les aubes 26 sont pressées contre les portions de réception 42 en étant animées d'un mouvement de friction. La pression est principalement radiale, et peut être inclinée de sorte à rester perpendiculaire à la surface de chaque portion de réception 42. La soudure comprend une phase de friction permettant la montée en température de la jonction entre l'aube 26 et la virole 28 jusqu'à ce qu'elle devienne pâteuse. Simultamément au mouvement de friction un effort radial est exercé sur la virole 28 via l'aube 26 soudée. Le mouvement de friction peut comprendre une composante suivant la corde de l'aube 26 afin de tirer profit de sa rigidité dans cette direction. Le mouvement de friction peut être orbital, par exemple pour s'adapter à la forme cambrée des aubes 26. S'en suit une phase d'immobilisation où les aubes sont immobilisées par rapport à la virole tout en maintenant l'effort radial le temps de la solidification de la soudure 62.

Un dispositif de soudage peut être adapté au soudage d'aubes 26 sur une virole externe 28. Le dispositif peut comprendre un support avec une surface d'appui qui épouse l'extérieur de la virole externe 28 pour éviter de la déformer. Le dispositif peut également être adapté pour permettre la préhension des aubes 26 depuis l'intérieur de la virole, et/ou en s'adaptant à la présence d'aubes voisines.

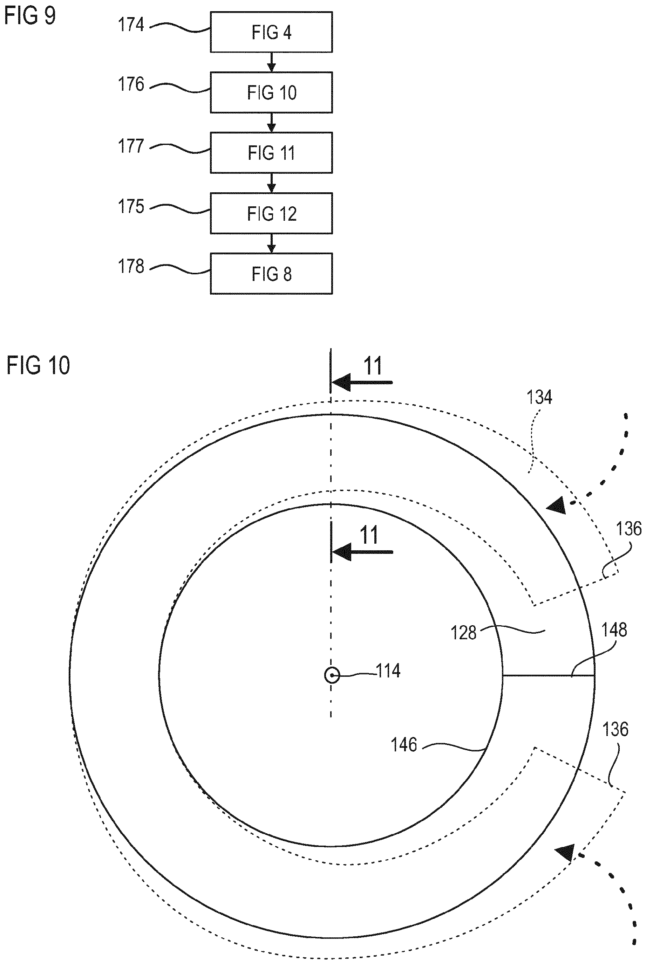

La figure 9 représente un procédé de réalisation d'un stator selon un deuxième mode de réalisation de l'invention. Cette figure 9 reprend la numérotation des figures précédentes pour les éléments identiques ou similaires, la numération étant toutefois incrémentée de 100. Des numéros spécifiques sont utilisés pour les éléments spécifiques à ce mode de réalisation.

Le procédé peut comprendre les étapes suivantes, éventuellement réalisées dans cet ordre :
- fourniture ou réalisation 174 d'une barre essentiellement brute ;
- cintrage 176 de la barre de sorte à décrire un cercle pour former une virole externe brute ;
- tournage 177 de la virole externe brute ;
- usinage 175 d'une face de la barre, notamment par fraisage, de sorte à y former des moignons d'aubes ;
- soudage 178 par friction d'aubes à l'intérieur de la virole externe, par exemple contre les moignons d'aubes.

Les étapes de fourniture ou réalisation 174 de la barre et/ou de soudage 178 des aubes peuvent s'effectuer de manière identique au premier mode de réalisation de l'invention. Ce mode réalisation se distingue du précédent par l'ordre d'enchaînement de certaines opérations, du fait que les moignons peuvent être formés sur la virole brute directement plutôt que sur la barre.

Dans ce mode de réalisation de l'invention, l'ordre de réalisation des étapes de tournage et de fraisage pour former les moignons peuvent ici être inversé.

Le procédé peut comprendre la répétition des étapes précédentes de sorte à former plusieurs viroles externes. Le procédé comprend alors l'assemblage axial et la fixation les unes aux autres des viroles précédement produites.

La figure 10 représente l'étape de cintrage de la barre 134 selon le deuxième mode de réalisation de l'invention, de sorte à former une virole externe 128 avec une surface interne annulaire 146.

La barre 134 conserve ses surfaces lisses, et est en particulier libre de moignons.

Le cintrage peut s'effectuer tel que décrit dans le premier mode de réalisation de l'invention. Cette étape de cintrage peut différer en raison de l'absence des moignons, ce qui offre davantage de surface d'appui pour effectuer le cintrage, et donc plus de facilités pour disposer les rouleaux de cintrage, ou tout autre outil nécessaire. L'absence des moignons permet de travailler sur une pièce plus homogène, puisque les moignons peuvent rigidifier localement la barre.

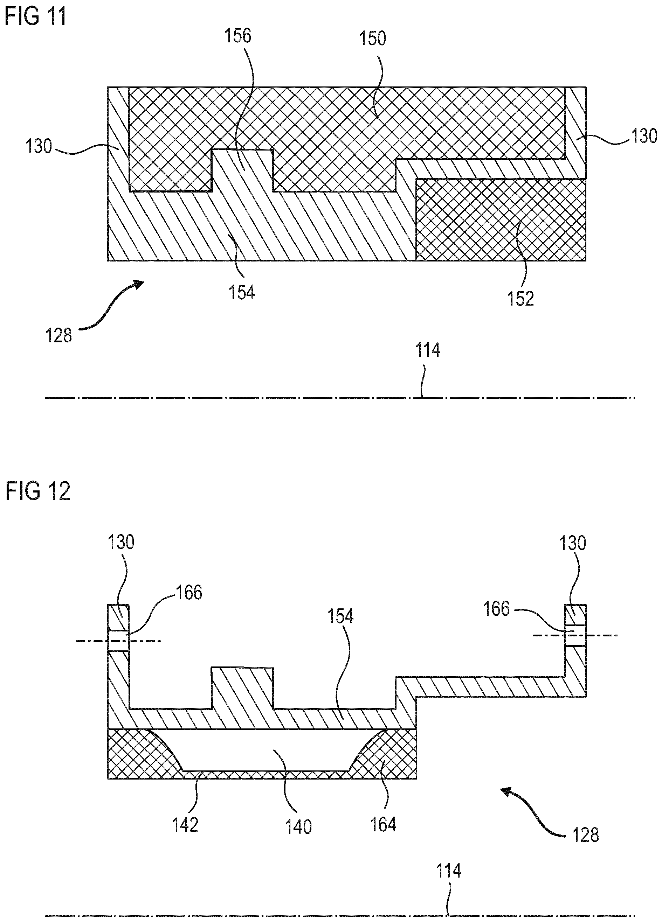

La figure 11 représente l'étape de tournage de la virole externe 128 brute selon le deuxième mode de réalisation de l'invention.

L'étape de tournage de la virole externe 128 brute est similaire ou identique à celle présentée dans le premier mode de réalisation de l'invention, une différence pouvant être l'absence des moignons à ce stade du procédé. Cette étape de tournage selon le deuxième mode peut se distinguer en ce que le tournage interne 152 est plus épais. Cette étape peut permet de réaliser des brides de fixation 130, un bourelet 156, une paroi annulaire 154 brute ; en partie grâce au tournage externe 150.

La figure 12 représente l'étape d'usinage, notamment par fraisage, de la virole externe 128 brute selon le deuxième mode de réalisation de l'invention. Cette étape permet de finaliser la paroi annulaire 154.

La matière enlevée 164 pendant le fraisage de la virole externe 128 brute peut permettre de réaliser les mêmes moignons 140 et/ou les mêmes portions de réception 142 que ceux décrits dans le premier mode de réalisation de l'invention, une différence étant que le fraisage s'effectue sur une pièce annulaire et non une pièce plate et droite. Cet usinage peut être réalisé tel que présenté dans le premier mode de réalisation. Réaliser le fraisage après le cintrage permet de fraiser une pièce moins longue, ce qui diminue la taille de la fraiseuse nécessaire. Cet usinage peut permettre de réaliser des orifices de fixation 166, éventuellement disposés sur les brides 130, sur la même machine où est usinée la virole.

Par ailleurs, effectuer le tournage avant le fraisage permet de conserver la rigidité de la virole brute pendant une partie du tournage. Lors du tournage, les profondeurs de passe en peuvent être augmentées, ce qui diminue le temps de fabrication. La zone dans laquelle doivent être taillés les moignons 140 forment un renfort, ce qui en outre simplifie la fixation de la virole 128 sur son tour.

De manière générale, pour chaque procédé de réalisation du stator selon l'invention, chaque étape de tournage de la virole externe brute est optionnelle car la virole peut être essentiellement un tube, dont l'épaisseur de la paroi est constante. Aussi, le tournage peut être remplacé par du fraisage. L'éventuel évidement de la virole externe peut s'effectuer par fraisage. Les brides annulaires de fixation peuvent être rapportées, par exemple soudées sur les extrémités axiales de la virole externe.

Chaque procédé peut comprendre une étape de mise en oeuvre d'un joint d'étanchéité contre la surface interne de la virole interne. Un tel joint peut être une couche annulaire de matériau abradable. Eventuellement, la virole peut être tournée après l'étape de soudage d'aubes.

Selon l'invention, il est possible de réaliser des viroles externes selon les différents modes de réalisation de l'invention, puis de les assembler.

## Revendications

1. Procédé de réalisation d'un stator de turbomachine axiale (2), notamment de compresseur (4 ; 6), le stator comprenant une virole externe (28 ; 128) avec une surface interne (46 ; 146) et une rangée annulaire d'aubes statoriques (26) s'étendant radialement vers l'intérieur depuis la virole (28; 128), le procédé comprenant, réalisées dans cet ordre, les étapes suivantes :
(a) fourniture ou réalisation (74 ; 174) d'une barre (34 ; 134) de matériau ;
(b) cintrage (76 ; 176) de la barre (34 ; 134) de sorte à décrire un cercle afin de former une virole externe (28 ; 128); puis
(c) soudage (78 ; 178) d'une rangée d'aubes (26) sur la virole externe (28 ; 128);
**caractérisé en ce que**
la surface interne (46 ; 146) de la virole comprend des portions de réception (42 ; 142) d'aubes généralement perpendiculaires à la direction radiale et formées sur des moignons d'aubes (40 ; 140),
et **en ce que**
lors de l'étape (c) soudage (78 ; 178), les aubes (26) sont soudées par friction sur les portions de réception (42 ; 142) d'aubes.

2. Procédé selon la revendication 1, **caractérisé en ce que** lors de l'étape (c) soudage (78 ; 178), les aubes(26) sont soudées par friction orbitale.

3. Procédé selon l'une des revendications 1 à 2, **caractérisé en ce qu'**après l'étape (b) cintrage (76 ; 176), le procédé comprend au moins une étape de tournage (77 ; 177) de la virole externe (28 ; 128).

4. Procédé selon la revendication 3, **caractérisé en ce que** l'étape de tournage (77 ; 177) comprend la réalisation d'une gorge annulaire (55) externe s'étendant axialement au droit des soudures (62) des aubes (26) sur la virole (28 ; 128), et éventuellement d'une portée tubulaire interne destinée à recevoir un joint annulaire et formée à distance axialement desdites soudures (62).

5. Procédé selon l'une des revendications 3 à 4, **caractérisé en ce que** l'étape de tournage (77 ; 177) comprend la formation d'un bourrelet annulaire (56 ; 156) qui s'étend radialement vers l'extérieur et qui est disposé axialement au droit des soudures (62) des aubes (26) sur la virole (28 ; 128).

6. Procédé selon l'une des revendications 1 à 5, **caractérisé en ce qu'**il comprend une étape de fraisage (175) de la virole de sorte à former les moignons (140) d'aubes sur la virole externe (128), l'étape de fraisage (175) étant réalisée après l'étape (b) cintrage (176), et les portions de réception (142) d'aubes étant formées sur les moignons (140).

7. Procédé selon l'une des revendications 3 à 5 et selon la revendication 6, **caractérisé en ce que** l'étape de fraisage (175) est réalisée après l'étape de tournage (177).

8. Procédé selon l'une des revendications 1 à 5, **caractérisé en ce qu'**il comprend une étape de fraisage (75) de la barre (34) de sorte à former les moignons (40) d'aubes sur la barre, l'étape de fraisage (75) étant réalisée avant l'étape de cintrage (77), et les portions de réception (42) d'aubes étant formées sur les moignons (40).

9. Procédé selon l'une des revendications 1 à 8, **caractérisé en ce que** la virole externe (28 ; 128) comprend une paroi (54 ; 154) généralement annulaire avec un profil de révolution s'étendant principalement axialement, éventuellement la hauteur radiale H des moignons (40 ; 140) est supérieure à l'épaisseur E2 de la paroi annulaire (54 ; 154), préférentiellement au moins deux fois supérieure, plus préférentiellement au moins trois fois supérieure.

10. Procédé selon l'une des revendications 1 à 9, **caractérisé en ce que** lors de l'étape (c) soudage (78 ; 178), au moins une ou chaque aube (26) est soudée en étant frottée contre une portion de réception (42 ; 142) selon un mouvement comprenant une composante le long de la corde de ladite aube (26).

11. Procédé selon l'une des revendications 1 à 10, **caractérisé en ce que** les portions de réception (42 ; 142) d'aubes forment une rangée annulaire de surfaces planes ; ou une surface annulaire généralement tubulaire ou tronconique.

12. Procédé selon l'une des revendications 1 à 11, **caractérisé en ce que** la virole externe (28 ; 128) comprend une paroi généralement annulaire (54 ; 154) avec un profil de révolution s'étendant principalement axialement et au moins une, préférentiellement au moins deux brides annulaires de fixation (30 ; 130) s'étendant radialement vers l'extérieur, chaque bride annulaire (30 ; 130) étant disposée à une extrémité axiale de la paroi annulaire (54 ; 154).

13. Procédé selon l'une des revendications 1 à 12, **caractérisé en ce que** l'écart entre deux aubes (26) voisines est inférieur à la hauteur radiale desdites aubes (26) voisines, la rangée d'aubes (26) statoriques comprend au moins quarante aubes (26), préférentiellement au moins cents aubes (26).

14. Procédé selon l'une des revendications 1 à 13, **caractérisé en ce que** la virole externe (28 ; 128) et les aubes (26) sont en un matériau métallique, notamment en titane, ou la virole externe (28 ; 128) et les aubes (26) sont réalisées en des matériaux polymères thermoplastiques.

15. Procédé selon l'une des revendications 1 à 14 **caractérisé en ce que** le stator est compris dans une turbomachine, la turbomachine comprenant préférentiellement plusieurs stators avec chacun une virole externe (28; 128) associée à une rangée d'aubes (26), les stators étant fixés axialement les uns aux autres.

## Patentansprüche

1. Verfahren der Herstellung eines Stators einer axialen Turbomaschine (2), insbesondere eines Kompressors (4; 6), wobei der Stator eine äußere Umhüllung (28; 128) mit einer inneren Oberfläche (46: 146) und eine ringförmige Reihe von Statorblättern (26) umfasst, die sich von der Umhüllung (28; 128) aus radial nach innen hin erstrecken, wobei das Verfahren die folgenden Schritte umfasst, die in dieser Reihenfolge ausgeführt werden:
(a) Bereitstellen oder Herstellung (74; 174) eines Materialstabes (34; 134);
(b) Biegen (76; 176) des Stabes (34; 134), sodass er einen Kreis beschreibt, um eine äußere Umhüllung (28; 128) zu bilden;
(c) Aufschweißen (78; 178) einer Reihe von Blättern (26) auf die äußere Umhüllung (28; 128);
**gekennzeichnet dadurch, dass**
die innere Oberfläche (46; 146) der Umhüllung Blattaufnahmebereiche (42; 142) umfasst, die weitgehend senkrecht zu der radialen Richtung sind und auf Blattstümpfen (40; 140) ausgebildet sind, und dadurch dass
bei dem Schritt (c) des Aufschweißens (78; 178) die Blätter (26) auf den Blattaufnahmebereichen (42; 142) reibgeschweißt werden.

2. Verfahren gemäß Anspruch 1, **gekennzeichnet dadurch, dass** bei dem Schritt (c) des Aufschweißens (78; 178) die Blätter (26) orbitalreibgeschweißt werden.

3. Verfahren gemäß einem der Ansprüche 1 oder 2, **gekennzeichnet dadurch, dass** nach dem Biegeschritt (b) (76; 176) das Verfahren zumindest einen Drehschritt (77; 177) der äußeren Umhüllung (28; 128) umfasst.

4. Verfahren gemäß Anspruch 3, **gekennzeichnet dadurch, dass** der Drehschritt (77; 177) die Herstellung einer äußeren ringförmigen Rille (55) umfasst, die sich axial an der Stelle der Aufschweißungen (62) der Blätter (26) auf der Umhüllung (28; 128) erstreckt, und möglicherweise einer inneren röhrenförmigen Unterstützung, die dazu bestimmt ist, eine ringförmige Dichtung zu empfangen und axial beabstandet von den besagten Aufschweißungen (62) ausgebildet ist.

5. Verfahren gemäß einem der Ansprüche 3 bis 4, **gekennzeichnet dadurch, dass** der Drehschritt (77; 177) die Ausbildung eines ringförmigen Wulstes (56; 156) umfasst, der sich radial nach außen hin erstreckt und der axial an der Stelle der Aufschweißungen (62) der Blätter (26) auf der Umhüllung (28; 128) angeordnet ist.

6. Verfahren gemäß einem der Ansprüche 1 bis 5, **gekennzeichnet dadurch, dass** es einen Frässchritt (175) der Umhüllung umfasst, derart, um die Blattstümpfe (140) auf der äußeren Umhüllung (128) auszubilden, wobei der Frässchritt (175) nach dem Biegeschritt (b) (176) ausgeführt wird und die Blattaufnahmebereiche (142) auf den Stümpfen (140) ausgebildet werden.

7. Verfahren gemäß einem der Ansprüche 3 bis 5 und gemäß Anspruch 6, **gekennzeichnet dadurch, dass** der Frässchritt (175) nach dem Drehschritt (177) ausgeführt wird.

8. Verfahren gemäß einem der Ansprüche 1 bis 5, **gekennzeichnet dadurch, dass** es einen Frässchritt (75) des Stabes (34) umfasst, derart, um die Blattstümpfe (40) auf dem Stab (34) auszubilden, wobei der Frässchritt (75) vor dem Biegeschritt (77) ausgeführt wird, und die Blattaufnahmebereiche (42) auf den Stümpfen (40) ausgebildet werden.

9. Verfahren gemäß einem der Ansprüche 1 bis 8, **gekennzeichnet dadurch, dass** die äußere Umhüllung (28; 128) eine weitgehend ringförmige Wand (54; 154) mit einem Umlaufprofil umfasst, das sich überwiegend axial erstreckt, wobei die radiale Höhe H der Stümpfe (40; 140) möglicherweise größer ist als die Dicke E2 der ringförmigen Wand (54; 154), vorzugsweise mindestens zweimal größer, noch bevorzugter mindestens dreimal größer.

10. Verfahren gemäß einem der Ansprüche 1 bis 9, **gekennzeichnet dadurch, dass** während des Schrittes (c) des Aufschweißens (78; 178) zumindest ein oder jedes Blatt (26) geschweißt wird, indem es gegen einen Aufnahmebereich (42; 142) gemäß einer Bewegung, die eine Komponente entlang der Sehne des besagten Blattes (26) umfasst, gerieben wird.

11. Verfahren gemäß einem der Ansprüche 1 bis 10, **gekennzeichnet dadurch, dass** die Blattaufnahmebereiche (42; 142) eine ringförmige Reihe von ebenen Oberflächen ausbilden, oder eine weitgehend röhrenförmige oder kegelstumpfförmige Oberfläche.

12. Verfahren gemäß einem der Ansprüche 1 bis 11, **gekennzeichnet dadurch, dass** die äußere Umhüllung (28; 128) eine weitgehend ringförmige Wand (54; 154) mit einem Umlaufprofil umfasst, das sich hauptsächlich axial erstreckt, und mindestens einem, vorzugsweise mindestens zwei ringförmigen Befestigungsflanschen (30; 130), die sich radial nach außen hin erstrecken, wobei jeder Befestigungsflansch (30; 130) an einem axialen Ende der ringförmigen Wand (54; 154) angeordnet ist.

13. Verfahren gemäß einem der Ansprüche 1 bis 12, **gekennzeichnet dadurch, dass** der Abstand zwischen zwei benachbarten Blättern (26) kleiner ist also die radiale Höhe der besagten benachbarten Blätter (26), wobei die Reihe Statorblätter (26) zumindest vierzig Blätter (26) umfasst, vorzugsweise zumindest einhundert Blätter (26).

14. Verfahren gemäß einem der Ansprüche 1 bis 13, **gekennzeichnet dadurch, dass** die äußere Umhüllung (28; 128) und die Blätter (26) aus einem metallischen Material sind, insbesondere aus Titan, oder dass die äußere Umhüllung (28; 128) und die Blätter (26) aus thermoplastischen Polymermaterialien gemacht sind.

15. Verfahren gemäß einem der Ansprüche 1 bis 14, **gekennzeichnet dadurch, dass** der Stator in einer Turbomaschine enthalten ist, wobei die Turbomaschine vorzugsweise mehrere Statoren umfasst, von denen jeder eine äußere Umhüllung (28; 128) hat, die mit einer Reihe von Blättern (26) verbunden ist, wobei die Statoren axial aneinander befestigt sind.

## Claims

1. Method of producing an axial turbine engine stator (2), particularly a compressor stator (4; 6), said stator comprising an external shroud (28; 128) with an internal surface (46; 146) and an annular row of stator blades (26) extending radially inwardly from the shroud (28; 128), the method comprising the following stages carried out in that order:
(a) supply or production (74; 174) of a material bar (34; 134);
(b) bending (76; 176) of the bar (34; 134) so that it makes a circle, in order to form an external shroud (28; 128);
(c) welding (78; 178) of a row of blades (26) onto the external shroud (28; 128);
**characterized in that**
the internal surface (46; 146) of the shroud comprises blade-receiving portions (42; 142) which are generally perpendicular to the radial direction and formed on blade stubs (40; 140)
and **in that**
during the welding (78; 178) stage (c), the blades (26) are friction-welded onto the blade-receiving portions (42; 142).

2. Method according to Claim 1, **characterized in that** during the welding (78; 178) stage (c), the blades (26) are orbital friction-welded.

3. Method according to one of Claims 1 to 2, **characterized in that** after the bending (76; 176) stage (b), the method comprises at least one turning stage (77; 177) of the external shroud (28; 128).

4. Method according to Claim 3, **characterized in that** the turning stage (77; 177) comprises the production of an external annular groove (55) extending at the axial position of the welds (62) of the blades (26) on the shroud (28; 128) and possibly an internal tubular support intended to receive an annular seal and formed at a distance axially from said welds (62).

5. Method according to one of Claims 3 to 4, **characterized in that** the turning stage (77; 177) comprises the formation of an annular bead (56; 156) which extends radially towards the outside and which is disposed at the axial position of the welds (62) of the blades (26) on the shroud (28; 128).

6. Method according to one of Claims 1 to 5, **characterized in that** it comprises a milling stage (175) of the shroud, so as to form the blade stubs (140) on the external shroud (128), the milling stage (175) being performed after the bending (176) stage (b), and the blade-receiving portions (142) being formed on the stubs (140).

7. Method according to one of Claims 3 to 5 and according to Claim 6, **characterized in that** the milling stage (175) is carried out after the turning stage (177).

8. Method according to one of Claims 1 to 5, **characterized in that** it comprises a milling stage (75) of the bar (34), so as to form blade stubs (40) on the bar, the milling stage (75) being performed before the bending stage (77) and the blade-receiving portions (42) being formed on the stubs (40).

9. Method according to one of Claims 1 to 8, **characterized in that** the external shroud (28; 128) comprises a generally annular wall (54; 154) with a rotational profile extending mainly axially, the radial height H of the stubs (40; 140) is possibly greater than the thickness E2 of the annular wall (54; 154), preferably at least two times greater, more preferably at least three times greater.

10. Method according to one of Claims 1 to 9, **characterized in that** during the welding (78; 178) stage (c) at least one or every blade (26) is welded while being rubbed against a receiving portion (42; 142) according to a movement comprising a component along the chord of said blade (26).

11. Method according to one of Claims 1 to 10, **characterized in that** the blade-receiving portions (42; 142) form an annular row of planar surfaces or a generally tubular or frustoconical surface.

12. Method according to one of Claims 1 to 11, **characterized in that** the external shroud (28; 128) comprises a generally annular wall (54; 154) with a rotational profile extending mainly axially and at least one, preferably at least two, annular fixing flanges (30; 130) extending radially towards the outside, each annular flange (30; 130) being disposed at one axial end of the annular wall (54; 154).

13. Method according to one of Claims 1 to 12, **characterized in that** the gap between two neighbouring blades (26) is smaller than the radial height of said neighbouring blades (26), the row of stator blades (26) comprises at least forty blades (26), preferably at least one hundred blades (26).

14. Method according to one of Claims 1 to 13, **characterized in that** the external shroud (28; 128) and the blades (26) are made of a metallic material, particularly titanium, or the external shroud (28; 128) and the blades (26) are produced from thermoplastic polymer materials.

15. Method according to any of claims 1 to 14, **characterized in that** the stator is comprised in a turbine engine, the turbine engine preferably comprising a plurality of stators each with an external shroud (28; 128) associated with a row of blades (26), the stators being axially fixed to one another.
